# EUROPEAN PATENT SPECIFICATION

(11) **EP 4 445 638 B1**
(45) Date of publication and mention of the grant of the patent: **17.12.2025**
(21) Application number: 22941090.7
(22) Date of filing: 11.05.2022
(51) Int. Cl.: H04W 24/02, H04W 24/08, H04W 24/10

(54) **QUALITY OF EXPERIENCE MANAGEMENT METHOD AND APPARATUS**
VERFAHREN UND VORRICHTUNG ZUR VERWALTUNG DER ERFAHRUNGSQUALITÄT
PROCÉDÉ ET APPAREIL DE GESTION DE QUALITÉ D'EXPÉRIENCE

(43) Date of publication of application: 16.10.2024
(73) Proprietor: ZTE Corporation, Shenzhen, Guangdong 518057 (CN)
(72) Inventor: ZHANG, Man, Shenzhen, Guangdong 518057 (CN); GAO, Yin, Shenzhen, Guangdong 518057 (CN); LI, Dapeng, Shenzhen, Guangdong 518057 (CN); LIU, Zhuang, Shenzhen, Guangdong 518057 (CN); LIU, Yansheng, Shenzhen, Guangdong 518057 (CN)
(74) Representative: Vossius & Partner Patentanwälte Rechtsanwälte mbB
(86) International application number: PCT/CN2022/092163
(87) International publication number: WO 2023/216127

(56) References cited:
- WO-A1-2022/086386
- CN-A- 107 534 887
- CN-A- 113 424 568
- CN-A- 113 676 930
- ZTE ET AL: "(TP for TS 38.300) introduce NR QoE", vol. RAN WG3, no. Online; 20210816 - 20210826, 6 August 2021 (2021-08-06), XP052035693, Retrieved from the Internet <URL:https://ftp.3gpp.org/tsg_ran/WG3_Iu/TSGR3_113-e/Docs/R3-214041.zip R3-214041 (TP for TS 38.300) Introduce NR QoE.doc> [retrieved on 20210806]
- ZTE ET AL: "Alignment of MDT and QoE Measurements", vol. RAN WG3, no. Online; 20210517 - 20210528, 7 May 2021 (2021-05-07), XP052002493, Retrieved from the Internet <URL:https://ftp.3gpp.org/tsg_ran/WG3_Iu/TSGR3_112-e/Docs/R3-212449.zip R3-212449 Alignment of MDT and QoE Measurements.doc> [retrieved on 20210507]
- ZTE ET AL: "(TP for E1/F1) Alignment of Radio-Related Measurement and QoE Measurements", vol. RAN WG3, no. Online; 20210816 - 20210826, 6 August 2021 (2021-08-06), XP052035701, Retrieved from the Internet <URL:https://ftp.3gpp.org/tsg_ran/WG3_Iu/TSGR3_113-e/Docs/R3-214050.zip R3-214050 (TP for E1F1) Alignment of MDT and QoE Measurements.doc> [retrieved on 20210806]
- ZTE, CHINA TELECOM, CHINA UNICOM: "Discussion on alignment of MDT and QoE Measurements", 3GPP DRAFT; R3-214048, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Online; 20210516 - 20210826, 6 August 2021 (2021-08-06), Mobile Competence Centre ; 650, route des Lucioles ; F-06921 Sophia-Antipolis Cedex ; France , XP052035699

## Description

### TECHNICAL FIELD

This document is directed generally to wireless communications.

### BACKGROUND

Wireless communication technologies are moving the world toward an increasingly connected and networked society. The rapid growth of wireless communications and advances in technology has led to greater demand for capacity and connectivity. Other aspects, such as energy consumption, device cost, spectral efficiency, and latency are also important to meeting the needs of various communication scenarios. In comparison with the existing wireless networks, next generation systems and wireless communication techniques need to provide support for an increased number of users and devices, as well as support an increasingly mobile society.
3GPP, R3-214041 relates to QoE Measurement Collection function enables collection of application layer measurements from the UE.
3GPP, R3-212449 relates to configuration, activation, and deactivation procedures for both signalling-based and management-based QoE measurement collection and reporting.
3GPP, R3-214050 discloses a bearer context setup request including QoE Assistance Information.

### SUMMARY

The invention is specified by the independent claims. Preferred embodiments are defined in the dependent claims. In the following description, although numerous features may be designated as optional, it is nevertheless acknowledged that all features comprised in the independent claims are not to be read as optional.

### BRIEF DESCRIPTION OF THE DRAWINGS

FIG. 1 shows an example of a wireless communication system that includes a base station (BS) and user equipment (UE).
FIG. 2 is a block diagram example of a wireless communication system.
FIG. 3 shows a scenario of QoE configuration.
FIG. 4 shows a scenario of QoE configuration.
FIG. 5 shows a scenario of overload solution.
FIG. 6 shows a scenario of overload solution.
FIG. 7 shows a scenario of QoE alignment.
FIG. 8 shows a scenario of QoE alignment.
FIG. 9 shows a scenario of configuration and information exchange between nodes.
FIG. 10 shows a scenario of configuration and information exchange between nodes.
FIG. 11 shows a scenario of configuration and information exchange between nodes.
FIG. 12 shows a scenario of architecture change.
FIG. 13 shows a scenario of architecture change.

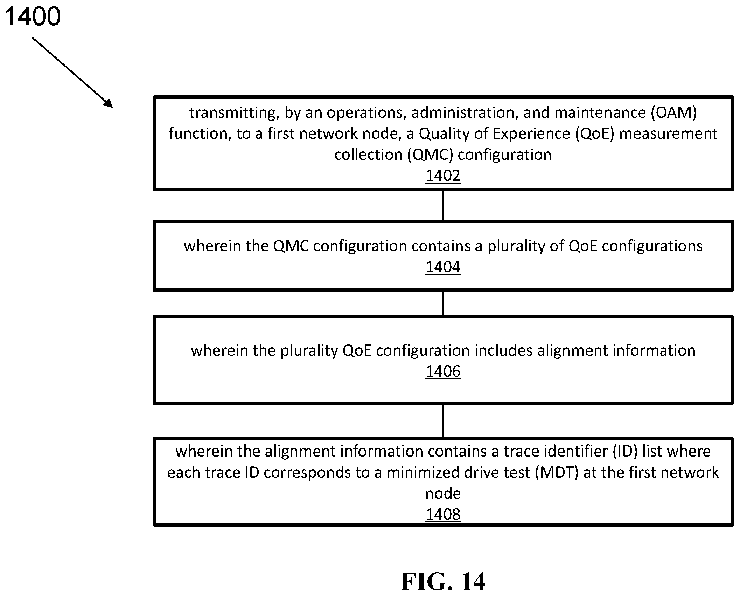

FIG. 14 is a flowchart illustrating an example method.

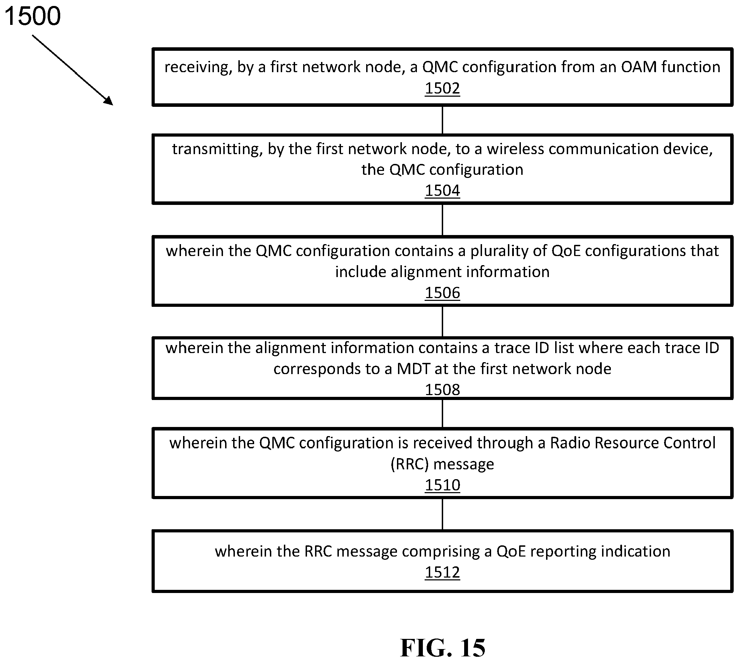

FIG. 15 is a flowchart illustrating an example method.

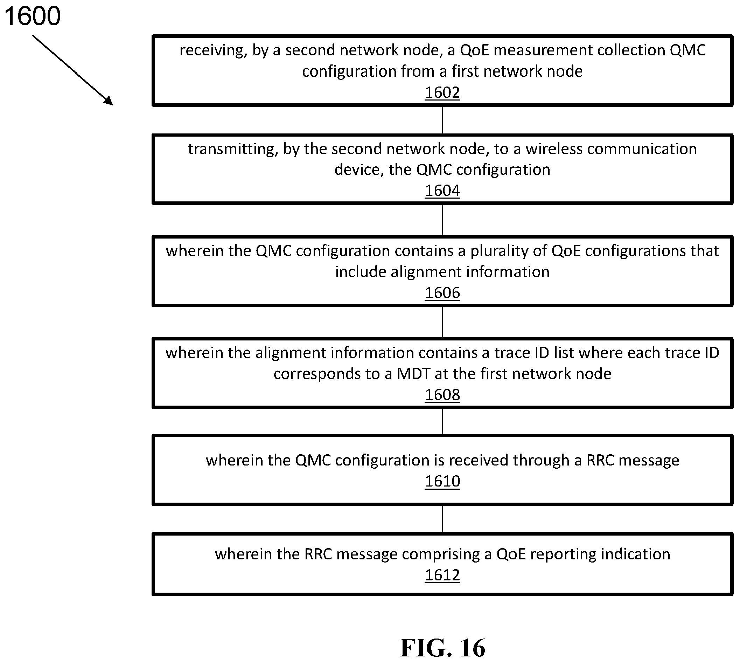

FIG. 16 is a flowchart illustrating an example method.

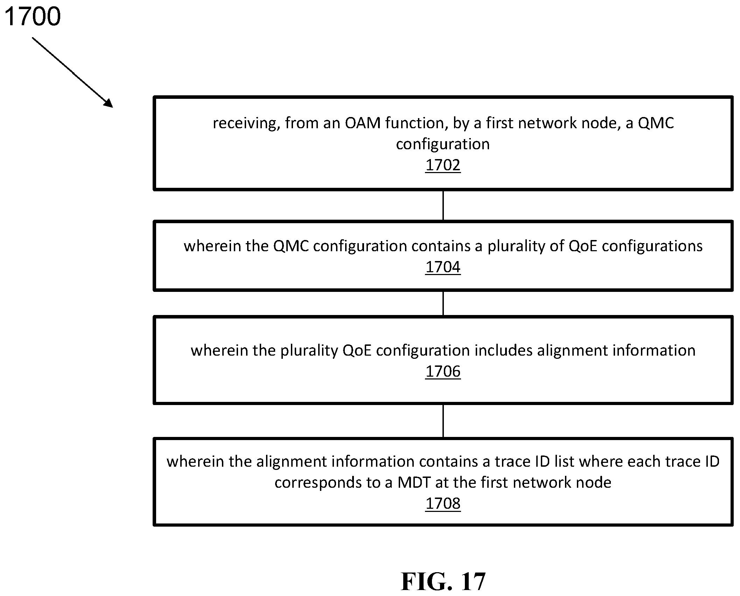

FIG. 17 is a flowchart illustrating an example method.

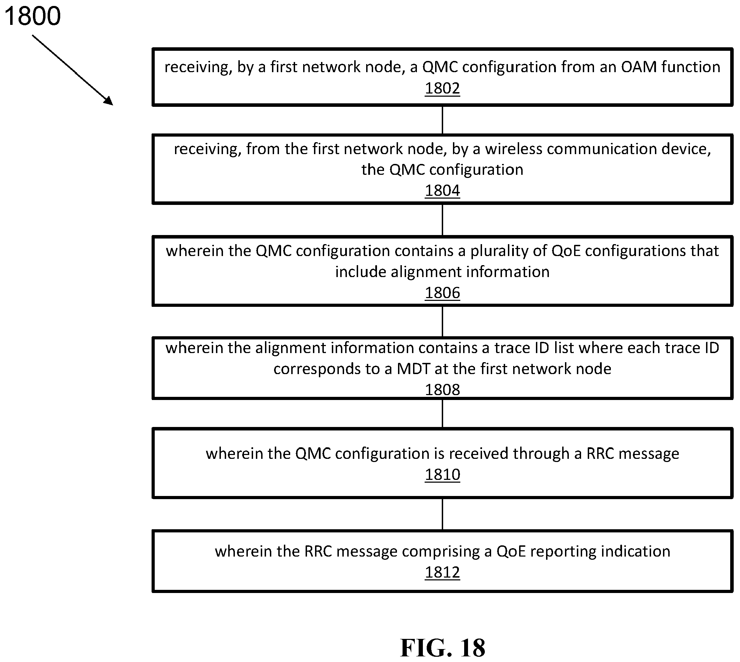

FIG. 18 is a flowchart illustrating an example method.

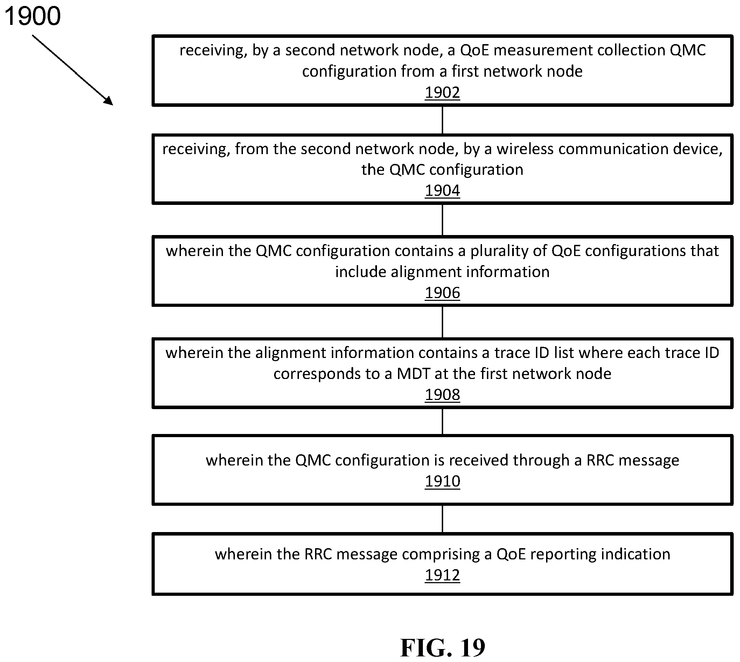

FIG. 19 is a flowchart illustrating an example method.

### DETAILED DESCRIPTION

Section headings are used in the present document only to improve readability and do not limit scope of the disclosed embodiments and techniques in each section to only that section. Certain features are described using the example of Fifth Generation (5G) wireless protocol. However, applicability of the disclosed techniques is not limited to only 5G wireless systems.

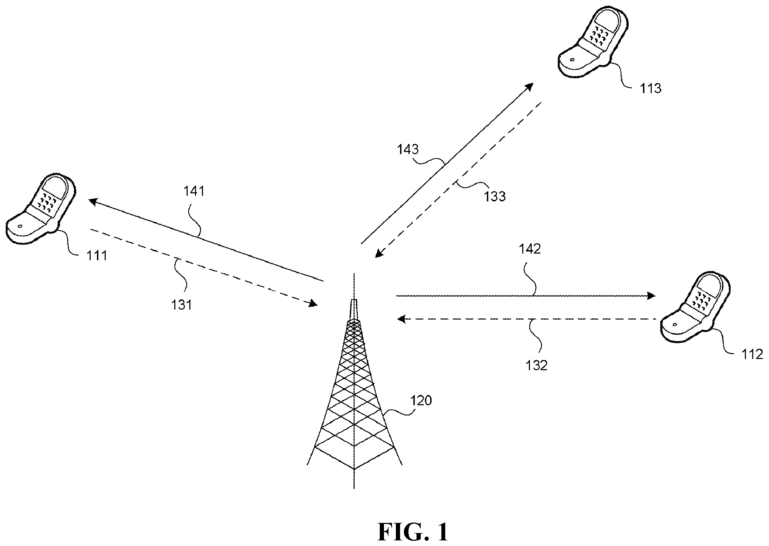

FIG. 1 shows an example of a wireless communication system (e.g., a long term evolution (LTE), 5G or NR cellular network) that includes a BS 120 and one or more user equipment (UE) 111, 112 and 113. In some embodiments, the uplink transmissions (131, 132, 133) can include uplink control information (UCI), higher layer signaling (e.g., UE assistance information or UE capability), or uplink information. In some embodiments, the downlink transmissions (141, 142, 143) can include DCI or high layer signaling or downlink information. The UE may be, for example, a smartphone, a tablet, a mobile computer, a machine to machine (M2M) device, a terminal, a mobile device, an Internet of Things (IoT) device, and so on.

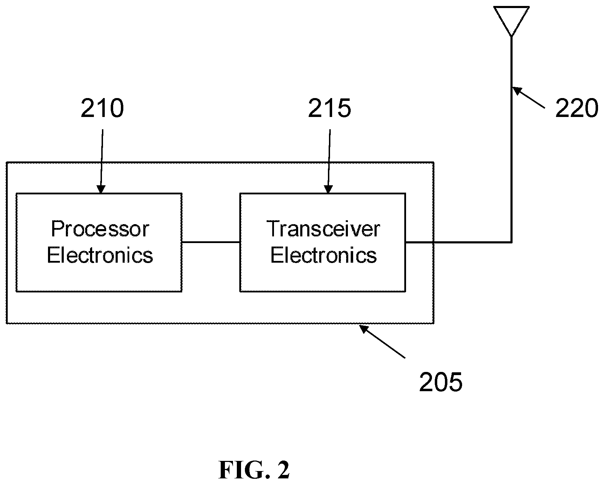

FIG. 2 is a block diagram representation of a portion of an apparatus, in accordance with some embodiments of the presently disclosed technology. An apparatus 205 such as a network device or a base station or a wireless device (or UE), can include processor electronics 210 such as a microprocessor that implements one or more of the techniques presented in this document. The apparatus 205 can include transceiver electronics 215 to send and/or receive wireless signals over one or more communication interfaces such as antenna(s) 220. The apparatus 205 can include other communication interfaces for transmitting and receiving data. Apparatus 205 can include one or more memories (not explicitly shown) configured to store information such as data and/or instructions. In some implementations, the processor electronics 210 can include at least a portion of the transceiver electronics 215. In some embodiments, at least some of the disclosed techniques, modules or functions are implemented using the apparatus 205.

Quality of Experience (QoE) measurements are configured to collect the measurement results in the application layer, which would reflect the user experience. The QoE management and optimization in standalone architecture has been standardized, including the configuration, reporting, mobility, RAN visible QoE, Minimized Drive Test (MDT)-QoE alignment and so on. However, the QoE management in dual connectivity architecture has not caught up. In dual connectivity, where user equipment (UE) is connected to two RAN nodes, issues could occur, such as how QoE measurement collection be configured and reported, how to handle cases in RAN overload situation, how to align MDT with QoE, how to maintain service continuity in mobility. This document demonstrates methods to resolve issues mentioned above.

NR Quality of Experience (QoE) Measurement Collection (QMC) function is activated by Operations, Administration, and Maintenance (OAM) via a separate QMC framework. For signaling-based QoE, the QMC configuration for a specific UE is sent from OAM to CN (Core Network), and then CN sends the QMC configuration to RAN node via UE-associated signaling. For management-based QoE, the OAM sends the QMC configuration to RAN node, and RAN selects UEs that satisfy the condition for QoE measurement and sends the configuration to the UEs.

For the QoE reporting in a standalone architecture, UE APP layer collects the QoE metrics and sends the collected data to UE AS layer via AT command. UE AS layer sends the QoE report to RAN node, after which the RAN node transfers the received QoE reports to MCE (Measurement Collection Entity). MCE is an entity which collects QoE measurement reports and make analysis for optimization.

In a RAN overload situation, the RAN node may send a pause indication to UE, to notify UE to pause QoE reporting. After the RAN overload situation is resolved, RAN node could send a resume indication to UE notifying that the UE could resume reporting. During mobility, the pause status of the source RAN node should be Paused to target node, to indicate that the QoE reporting has been paused at UE.

MDT measurements can be collected and used for QoE analysis, which is called MDT-QoE alignment. If QMC configuration includes the Trace ID of the MDT measurement, the RAN node should transfer the corresponding MDT reports to MCE for alignment with QoE, time stamp information and Trace ID would be sent together for MCE to make the correlation with MDT and QoE reports in time scale. After the QoE measurement starts in UE APP layer, UE can send a QoE start indication to RAN node. After RAN node receives the QoE measurement start indication, it can activate the MDT configuration.

During handover, the QMC configuration would be transferred from source node to the target node via Handover Request and Retrieve UE context message in XnAP.

In dual connectivity, UE is connected to two RAN nodes, one acts as Master Node (MN), and the other one acts as Secondary Node (SN). Both MN and SN can be configured with MDT and collect MDT reports. MDT is activated via Trace function. The MDT reports are sent to TCE (Trace Collection Entity), while QoE measurement reports are sent to MCE (Measurement Collection Entity).

### Embodiment 1: QoE configuration over MN and reporting over MN/SN

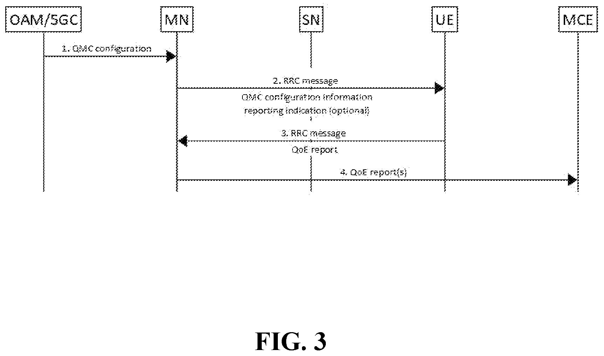

FIG. 3 shows detail steps of embodiment 1.

Step 1: OAM or 5GC sends the QMC configuration to MN. For signaling-based QoE, the QMC configuration is transferred by 5GC to RAN node. For management-based QoE, the OAM directly sends the configuration to RAN node. The QMC configuration is a list that contains multiple configurations of QoE, where each of the list includes at least one of the following items:
QoE container
QoE reference
MCE IP address
service type
area scope
slice list
available RAN visible QoE metrics
alignment information: Trace ID list. The trace ID list might include the Trace id of the immediate MDT at MN, immediate MDT at SN, logged MDT in RRC_INACTIVE state.

Step 2: MN sends QMC configuration information to UE via Radio Resource Control (RRC) message. A reporting indication is included in the RRC message sent by MN, to indicate to UE regarding which node the QoE reports should be sent to, i.e., MN or SN.

Step 3: If MN is the reporting leg, e.g., the reporting indication indicates that the UE should send QoE report to MN, then UE sends the collected QoE reports to MN via RRC message.

Step 4: MN forwards the received QoE report(s) to MCE.

Note: If SN is the reporting leg, e.g., the reporting indication indicates that the UE should send QoE report to SN, then UE sends the collected QoE reports to SN via RRC message. In this case, After SN receives the QoE reports from UE, it can directly send the QoE reports to MCE, or it can sends the QoE reports to MN and let MN transfers the QoE reports to MCE. The related steps are the same as shown in step 5a-5b and 6b of Embodiment 2.

### Embodiment 2: QoE configuration and reporting over SN

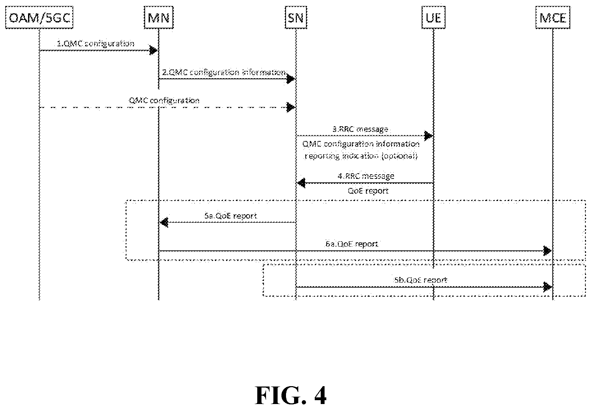

FIG. 4 shows detail steps of embodiment 2.

Step 1: OAM or 5GC sends the QMC configuration to MN.

Step 2: MN forwards the QMC configuration to let SN configure it to UE.

Note: OAM or 5GC can also directly send the QMC configuration to SN, as shown by the step with dotted line in the FIG. 4.

Step 3: SN sends QMC configuration information to UE via RRC message. A reporting indication can be included in the RRC message sent by SN, to indicate to UE regarding which node the QoE reports should be sent to, i.e., MN or SN.

Steo 4: If SN is the reporting leg, e.g., the reporting indication indicates that the UE should send QoE report to SN, then UE sends the collected QoE reports to SN via RRC message. UE can also report to MN, as shown in Embodiment 1.

Step 5a-6a: After SN receives the QoE report from UE, one option is that SN can forward the QoE report to MN and let MN transfer the QoE report(s) to MCE.

Step 5b: the other option is that after SN receives the QoE report from UE, SN can directly forward the QoE report to MCE.

### Embodiment 3: Network-based overload solution

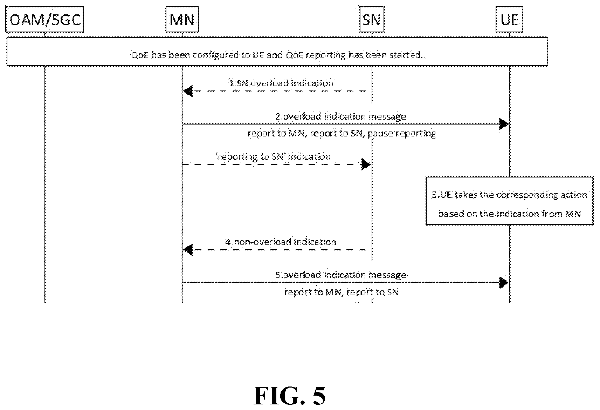

FIG. 5 shows detail steps of embodiment 3.

MN and SN may experience RAN overload separately. Network based solution is to let MN consider the overall situation of both MN and SN, and sends the final decision to UE about the handling of overload:
Step 1: If RAN overload happens in SN, SN sends an SN overload indication or pause requirement to MN via Xn Application Protocol (XnAP) message, e.g., S-NODE MODIFICATION REQUIRED. If SN does not experience RAN overload, skip this step.
Step 2: MN makes the decision on RAN overload based on MN overload situation and the received indication from SN overload:
   If UE reports through SN and SN has sent the overload indication to MN, while MN is not in overload, MN should send the "report to MN" indication to UE, so that UE can send the reports to MN, to release the burden on SN.
   If UE reports through MN and MN is experiencing overload situation, while SN has not sent any overload indication to MN, MN should send "report to SN" indication to UE, so that UE can send reports to SN, to release the burden on MN. In this case, MN would also send the indication to SN via XnAP message, e.g., S-NODE MODIFICATION REQUEST, to notify SN that UE would report to SN.
   Regardless of UE's reporting path, if both MN and SN are in RAN overload, MN should send "Pause" indication to UE, then UE should pause the QoE measurement reporting.
Step 3: UE takes the corresponding action based on the indication from MN, e.g., report to MN, report to SN, or pause reporting.
Step 4: If RAN overload situation has ended in SN, SN sends an SN non-overload indication or resume requirement to MN via XnAP message, e.g., S-NODE MODIFICATION REQUIRED. If SN does not experience RAN overload, skip this step.
Step 5: If the UE reporting was paused, and either MN or SN or both ended overload situation, MN sends an indication to UE notifying that UE should resume reporting, e.g., to report to MN or SN. Report to MN or SN is based on the status of the nodes.

Note: Step 2 and Step 5 can use the same message in RRC, which can be an ENUMERATED type including three items, e.g., ENUMERATED {MN, SN, pause...}.

### Embodiment 4: UE-based overload solution

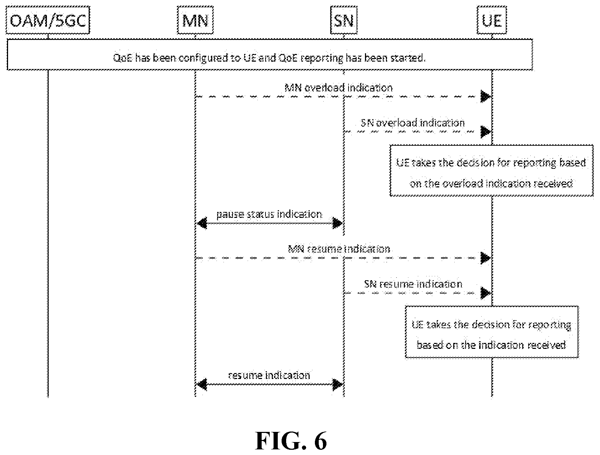

FIG. 6 shows detail steps of embodiment 4.

MN and/or SN send the overload/resume indication to UE via RRC message separately. UE makes it's own decision based on the received indication from MN/SN.

When the reporting is paused by MN and/or SN, MN and/or SN should send pause status indication to SN and/or MN via XnAP to indicate that the reporting has been paused. The indication can be sent explicitly via XnAP or via transparent container.

Similarly, when the reporting has been resumed by MN and/or SN, MN and/or SN should send resume indication to SN and/or MN via XnAP to indicate that the reporting has been resumed. The indication can be sent explicitly via XnAP or via transparent container.

### Embodiment 5: UE-assisted MDT-QoE alignment

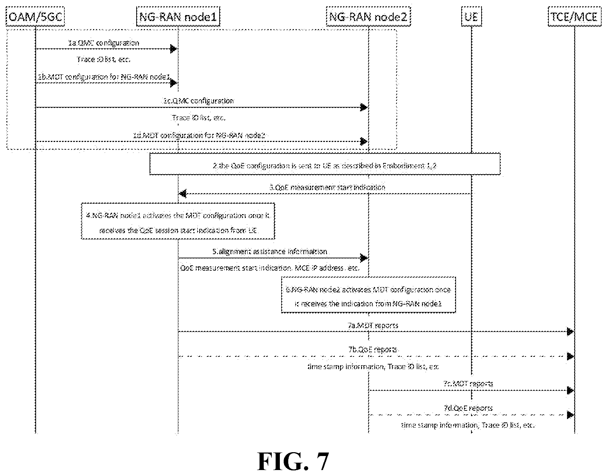

FIG. 7 shows detail steps of embodiment 5. FIG. 7 illustrates two following two scenarios:
NG-RAN node1 represents MN, NG-RAN node2 represents SN; and
NG-RAN node1 represents SN, NG-RAN node2 represents MN.

Step 1a/b/c/d: OAM or 5GC sends the QMC and MDT configurations to NG-RAN node1/NG-RAN node2. The sequence of the messages and whether the configuration should be sent to NG-RAN node1 or NG-RAN node2 depend on OAM. If the Trace ID list in the QMC configuration includes the Trace ID of the MDT in NG-RAN node1 or NG-RAN node2, NG-RAN node1 or NG-RAN node2 should forward the corresponding MDT reports to MCE for correlation with QoE.

Step 2: The QMC configuration is sent to UE as described in Embodiment 1 and 2.

Step 3: After the QoE measurement session starts in UE application layer, it sends an QoE measurement start indication to NG-RAN node1.

Step 4: If the Trace ID list of the QMC configuration includes the Trace ID of the MDT in NG-RAN node1, once NG-RAN node1 receives the QoE measurement start indication from UE, NG-RAN node1 activates the MDT configuration.

Note: NG-RAN node1 can also activate the MDT configuration without receiving the QoE measurement start indication from UE.

Step 5: If the Trace ID list of the QMC configuration includes the Trace ID of the MDT in NG-RAN node2, NG-RAN node1 sends the alignment assistance information to NG-RAN node2 via XnAP message, where the information includes at least one of the following:
QoE measurement start indication
MCE IP address
Trace ID list
MDT measurements to be collected

Step 6: NG-RAN node2 activates corresponding MDT configuration once it receives the alignment assistance information from NG-RAN node1. (Note: NG-RAN node2 can also activates the MDT configuration without receiving the QoE measurement start indication.)

Step 7: NG-RAN node1 and NG-RAN node2 send MDT reports to MCE for alignment. If -RAN node1/NG-RAN node2 receives QoE reports, NG-RAN node1/NG-RAN node2 should send the QoE reports together with time stamp information of QoE and MDT reports and Trace ID list to MCE to better assist with MCE to correlate the corresponding MDT reports with QoE reports in time scale.

### Embodiment 6: Normal alignment without indication from UE

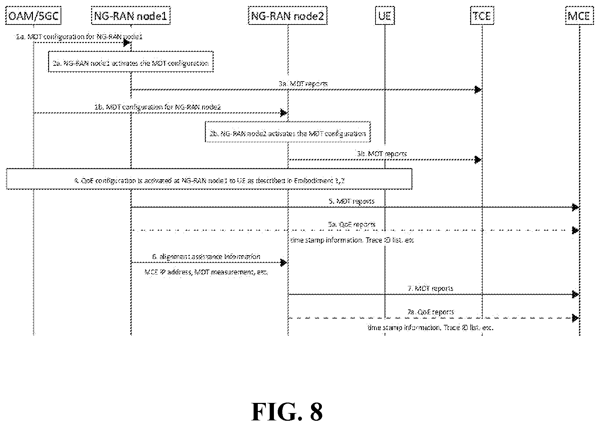

FIG. 8 shows detail steps of embodiment 6. FIG. 8 illustrates two following two scenarios:
NG-RAN node1 represents MN, NG-RAN node2 represents SN; and
NG-RAN node1 represents SN, NG-RAN node2 represents MN.

Step 1-3: MDT configuration are activated at MN and SN.

Step 4: QoE configuration is activated at NG-RAN node1 as described in Embodiment 1 and Embodiment 2. If the Trace ID list in the QMC configuration includes the Trace ID of the MDT in MN or SN, MN or SN should forward the corresponding MDT reports to MCE for correlation with QoE.

Step 5: If the Trace ID list of the QMC configuration includes the Trace ID of the MDT in NG-RAN node 1, NG-RAN node2 should forward the MDT reports to MCE for correlation with QoE. At the same time, NG-RAN node1 can continue to send MDT reports to TCE.

Step 5a: If there are QoE reports collected in NG-RAN node1, NG-RAN node1 should send the QoE reports together with time stamp information of QoE and MDT reports and Trace ID list to MCE, in order to assist with MCE to correlate the corresponding MDT reports with QoE reports in time scale.

Step 6: If the Trace ID list of the QMC configuration includes the Trace ID of the MDT in NG-RAN node2, NG-RAN node1 sends the alignment assistance information to NG-RAN node2 via XnAP message, where the information includes at least one of the following:
QoE measurement start indication
MCE IP address
Trace ID list
MDT measurements to be collected

Step 7: After receiving the alignment assistance information, NG-RAN node2 starts to send MDT reports to MCE for correlation with QoE. At the same time, NG-RAN node2 can continue to send MDT reports to TCE.

Step 7a: If NG-RAN node2 receives QoE reports, NG-RAN node2 should send the QoE reports together with time stamp information of QoE and MDT reports and Trace ID list to MCE, to better assist with MCE to correlate the corresponding MDT reports with QoE reports in time scale.

### Embodiment 7: mobility in MN initiated SN change

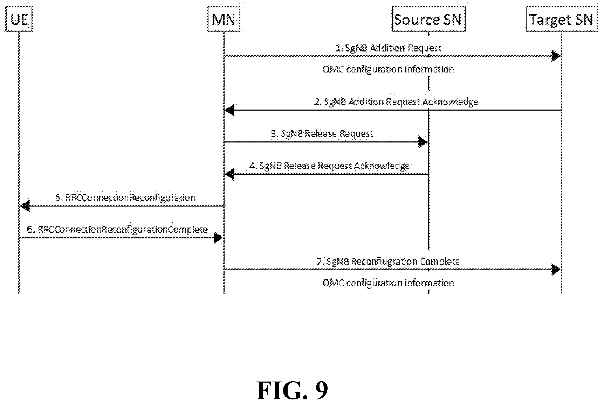

FIG. 9 shows detail steps of embodiment 7.

Step 1: MN sends SgNB Additional Request to Target SN that could include the QMC configuration information list, where each list could include at least one of the following:
UE application layer measurement configuration container
QoE reference
RRC level ID
MCE IP address
service type
area scope
slice list
available RAN visible QoE metrics
alignment information: Trace ID list (MDT at MN, MDT at SN, logged MDT in INACTIVE)
pause status indication

Note: Pause status indication can be transferred to target SN explicitly over XnAP and to target SN via transparent container.

Step 2: Target SN sends SgNB Additional Request Acknowledge message to MN.

Step 3: MN sends SgNB Release Request message to Source SN.

Step 4: Source SN sends SgNB Release Request Acknowledge message to MN.

Step 5: MN sends RRCConnectionReconfiguration to UE.

Step 6: UE sends RRCConnectionReconfigurationComplete to MN.

Step 7: MN sends SgNB Reconfiguration Complete message to Target SN, which can include the QMC configuration information list, where each list could include at least one of the following:
UE application layer measurement configuration container
QoE reference
RRC level ID
MCE IP address
service type
area scope
slice list
available RAN visible QoE metrics
alignment information: Trace ID list (MDT at MN, MDT at SN, logged MDT in INACTIVE)
pause status indication

Note: Pause status indication can be transferred to target SN explicitly over XnAP and to target SN via transparent container.

Note: Before SN change happens, if the UE is reporting to source SN, then after SN changes, the UE can continue to report to target SN. UE can also report to MN after the SN changes. MN can send a reporting indication to UE regarding whether UE should report to MN or SN, as described in Embodiment 1 and 2.

### Embodiment 8: mobility in SN initiated SN change

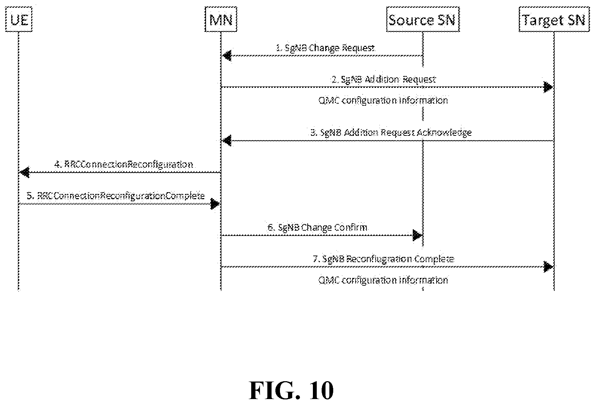

FIG. 10 shows detail steps of embodiment 8.

Similar to Embodiment 7, QMC configuration information can be transferred to target SN via SgNB Additional Request message (Step 2) or SgNB Reconfiguration Complete message (Step 7).

QMC configuration information is a list of multiple configurations, where each list could include at least one of the following:
UE application layer measurement configuration container
QoE reference
RRC level ID
MCE IP address
service type
area scope
slice list
available RAN visible QoE metrics
alignment information: Trace ID list (MDT at MN, MDT at SN, logged MDT in INACTIVE)
pause status indication

Note: Pause status indication can be transferred to target SN explicitly over XnAP and to target SN via transparent container.

Note: Before SN change happens, if the UE is reporting to source SN, then after SN changes, the UE can continue to report to target SN. MN can also send a reporting indication to UE regarding whether UE should report to MN or SN, as described in Embodiment 1 and 2.

### Embodiment 9: Inter-MN handover with/without SN change

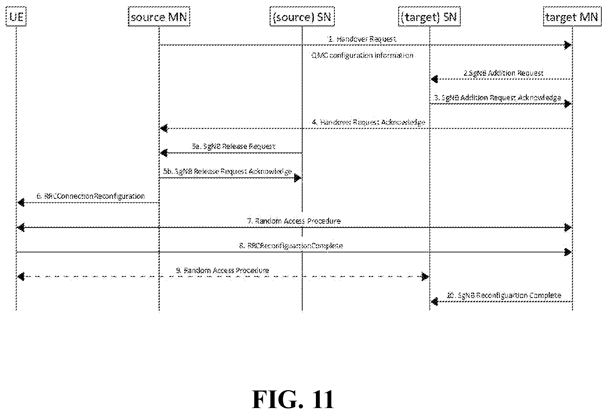

FIG. 11 shows detail steps of embodiment 9.

QMC configuration information is transferred from source MN to target MN via Handover request message (Step 1), and can be sent from target MN to target SN via SgNB Additional Request message (Step 2).

QMC configuration information is a list of multiple configurations, where each list could include at least one of the following:
UE application layer measurement configuration container
QoE reference
RRC level ID
MCE IP address
service type
area scope
slice list
available RAN visible QoE metrics
alignment information: Trace ID list (MDT at MN, MDT at SN, logged MDT in INACTIVE)
pause status indication

Note: Pause status indication can be transferred to target SN explicitly over XnAP and to target SN via transparent container.

Note: For inter-MN handover with SN changes, after the handover, UE can report to target MN. MN can also send an indication to UE regarding whether UE should report to MN or SN. For inter-MN handover without SN changes, if the UE was reporting to SN before the handover, after the handover, UE can continue to report to SN. MN can also send an indication to UE about whether UE should report to MN or SN.

### Embodiment 10: from Standalone architecture to dual connectivity architecture

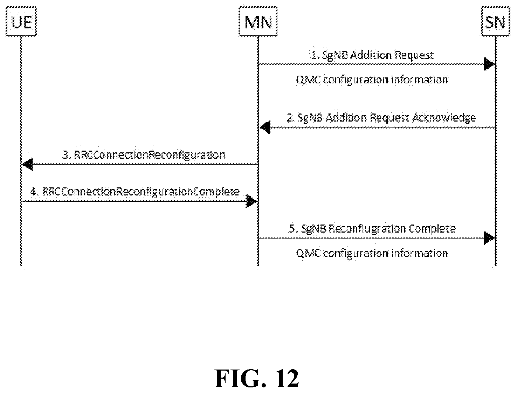

FIG. 12 shows detail steps of embodiment 10.

MN initiates SgNB Additional Request message to a SN to establish dual connectivity, where the QMC configuration can be transferred to SN via SgNB configuration Request message.

### Embodiment 11) from Dual connectivity to Standalone architecture

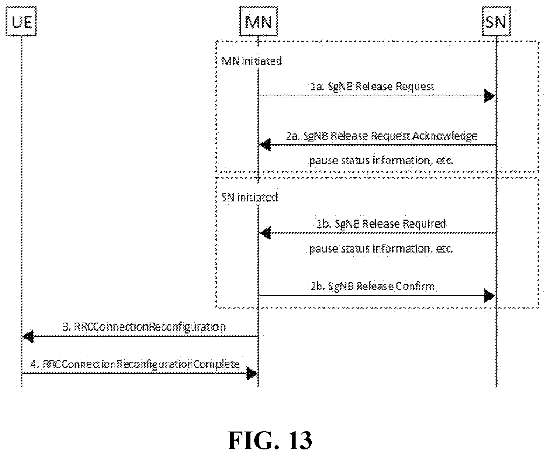

FIG. 13 shows detail steps of embodiment 1

The SN release procedure is initiated to release the SN, which include MN initiated SN release and SN initiated SN release.

Before the SN is released, the QoE related information should be sent to MN, via SgNB Release Request Acknowledge message in MN initiated SN release (Step 2a) and SgNB Release Required message in SN initiated SN release (Step 1b). The QoE related information in SN may include pause status indication, QMC configuration information, QoE report, RAN visible QoE information and so on.

Some of the embodiments described herein are described in the general context of methods or processes, which may be implemented in one embodiment by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Therefore, the computer-readable media can include a non-transitory storage media. Generally, program modules may include routines, programs, objects, components, data structures, etc. that perform particular tasks or implement particular abstract data types. Computer- or processor-executable instructions, associated data structures, and program modules represent examples of program code for executing steps of the methods disclosed herein. The particular sequence of such executable instructions or associated data structures represents examples of corresponding acts for implementing the functions described in such steps or processes.

Some of the disclosed embodiments can be implemented as devices or modules using hardware circuits, software, or combinations thereof. For example, a hardware circuit implementation can include discrete analog and/or digital components that are, for example, integrated as part of a printed circuit board. Alternatively, or additionally, the disclosed components or modules can be implemented as an Application Specific Integrated Circuit (ASIC) and/or as a Field Programmable Gate Array (FPGA) device. Some implementations may additionally or alternatively include a digital signal processor (DSP) that is a specialized microprocessor with an architecture optimized for the operational needs of digital signal processing associated with the disclosed functionalities of this application. Similarly, the various components or sub-components within each module may be implemented in software, hardware or firmware. The connectivity between the modules and/or components within the modules may be provided using any one of the connectivity methods and media that is known in the art, including, but not limited to, communications over the Internet, wired, or wireless networks using the appropriate protocols.

While this document contains many specifics, these should not be construed as limitations on the scope of an invention that is claimed or of what may be claimed, but rather as descriptions of features specific to particular embodiments. Certain features that are described in this document in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or a variation of a sub-combination. Similarly, while operations are depicted in the drawings in a particular order, this should not be understood as requiring that such operations be performed in the particular order shown or in sequential order, or that all illustrated operations be performed, to achieve desirable results.

Only a few implementations and examples are described, and other implementations, enhancements, and variations can be made based on what is described and illustrated in this document.

## Claims

1. A method of wireless communication, comprising:
receiving, by a first network node operating in a dual connectivity scenario, a Quality of Experience, QoE, measurement collection, QMC, configuration from an operations, administration, and maintenance, OAM, function;
transmitting, by the first network node, to a wireless communication device, the QMC configuration;
wherein the QMC configuration contains a plurality of QoE configurations that include alignment information;
wherein the alignment information contains a trace ID list where each trace ID corresponds to a MDT at the first network node;
wherein the QMC configuration is transmitted using a Radio Resource Control, RRC, message;
wherein the RRC message comprises a QoE reporting indication that indicates the first network node or a second network node where the wireless communication device is to send a QoE report,
wherein the first network node includes a master node, and
wherein the second network node includes a secondary node.

2. The method of claim 1, further comprising:
receiving, by the first network node, from the wireless communication device, the QoE report.

3. The method of claim 1, wherein the method includes, in case that the first network node is overloaded:
transmitting, by the first network node, to the wireless communication device, the overload indication through a RRC message;
transmitting, by the first network node, to the second network node, a pause indication through a Xn Application Protocol, XnAP, message indicating the QoE reporting is paused; and
transmitting, by the first network node, to the second network node, a resume indication through a XnAP message indicating the QoE reporting can be resumed.

4. The method of claim 3, further comprising:
receiving, by the first network, from the second network node, a release message;
wherein the release message can be a release required message or a release acknowledge message; and
wherein the release message comprising one or more of the following: pause status indication, QMC configuration information, QoE report, RAN visible QoE information.

5. The method of claim 1, wherein the method includes, in case that the first network node is overloaded:
receiving, by the first network node from the second network node, an overload report through a first XnAP message;
wherein the first XnAP message further comprising an overload indication or a pause requirement;
indicating, to the wireless communication device, QoE reporting is paused by the first network node and the second network node in response to the first network node and the second network node being overloaded;
receiving, by the first network node from the second network node, a resume report through a second XnAP message;
wherein the second XnAP message further comprising an resume indication; and
indicating, to the wireless communication device, QoE reporting has been resumed by the first network node.

6. The method of claim 1, further comprising:
transmitting, by the first network node, to a third network node, an additional information request;
transmitting, by the first network node, to the third network node, reconfiguration message;
wherein the information request comprising the QMC configuration information;
wherein the QMC configuration information further comprising a pause status indication; and
transmitting, by the first network node, to the third network node, the pause status indication through one or more of the following ways: XnAP message and transparent container,
wherein the third network node includes a target secondary node.

7. The method of claim 5, wherein the additional information request further comprising dual connectivity request;
transmitting, by the first network node, to a second network node, the QMC configuration information through a configuration request message.

8. The method of claim 1, further comprising:
transmitting, by the first network node, to a fourth network node, the QMC configuration;
wherein the QMC configuration is transmitted through a handover request;
wherein the QMC configuration information further comprising a pause status indication; and
transmitting, by the first network node, to the fourth network node, the pause status indication through one or more of the following ways: XnAP message and transparent container,
wherein the fourth network node includes a target master node.

9. The method of claim 8, further comprising:
communicating, by the first network node through the fourth network node, an additional information request to a third network node, wherein the third network node includes a target secondary node.

10. The method of claim 1, wherein QMC configuration further comprising alignment information;
wherein the alignment information comprising one or more of the following: QoE measurement start indication, MCE IP address, Trace ID list, and MDT.

11. An apparatus (205) for wireless communication comprising a processor (210) configured to implement the method of any of claims 1 to 10.

12. A computer readable medium having code stored thereon, the code when executed by a processor (210), causing the processor (210) to implement a method recited in any of claims 1 to 10.

## Patentansprüche

1. Verfahren für eine drahtlose Kommunikation, umfassend:
Empfangen, durch einen ersten Netzwerkknoten, der in einem Szenario der dualen Konnektivität betrieben wird, einer Konfiguration einer Erlebnisqualität-, QoE, - Messsammlung, QMC, von einer Betriebs-, Verwaltungs- und Wartungs-, OAM, - Funktion;
Übertragen, durch den ersten Netzwerkknoten an eine drahtlose Kommunikationsvorrichtung, der OMC-Konfiguration;
wobei die OMC-Konfiguration eine Vielzahl von QoE-Konfigurationen enthält, die Ausrichtungsinformationen einschließen;
wobei die Ausrichtungsinformationen eine Trace-ID-Liste enthalten, wobei jede Trace-ID einem MDT an dem ersten Netzwerkknoten entspricht;
wobei die OMC-Konfiguration unter Verwendung einer Funkressourcensteuerungs-Nachricht, RRC-Nachricht, übertragen wird;
wobei die RRC-Nachricht eine QoE-Berichtsanzeige umfasst, die den ersten Netzwerkknoten oder einen zweiten Netzwerkknoten anzeigt, an den die drahtlose Kommunikationsvorrichtung einen QoE-Bericht senden soll,
wobei der erste Netzwerkknoten einen Masterknoten einschließt und
wobei der zweite Netzwerkknoten einen sekundären Knoten einschließt.

2. Verfahren nach Anspruch 1, ferner umfassend:
Empfangen, durch den ersten Netzwerkknoten von der drahtlosen Kommunikationsvorrichtung, des QoE-Berichts.

3. Verfahren nach Anspruch 1, wobei das Verfahren für den Fall, dass der erste Netzwerkknoten überlastet ist, einschließt:
Übertragen, durch den ersten Netzwerkknoten an die drahtlose Kommunikationsvorrichtung, der Überlastungsanzeige über eine RRC-Nachricht;
Übertragen, durch den ersten Netzwerkknoten an den zweiten Netzwerkknoten, einer Pausenanzeige über eine Xn-Anwendungsprotokoll-Nachricht, XnAP-Nachricht, die anzeigt, dass die QoE-Berichterstattung pausiert ist; und
Übertragen, durch den ersten Netzwerkknoten an den zweiten Netzwerkknoten, einer Wiederaufnahmeanzeige über eine XnAP-Nachricht, die anzeigt, dass die QoE-Berichterstattung wiederaufgenommen werden kann.

4. Verfahren nach Anspruch 3, ferner umfassend:
Empfangen, durch das erste Netzwerk von dem zweiten Netzwerkknoten, einer Freigabenachricht;
wobei die Freigabenachricht eine Freigabe-erforderlich-Nachricht oder eine Freigabe-bestätigt-Nachricht sein kann; und
wobei die Freigabenachricht eines oder mehrere der Folgenden umfasst: Pausenstatusanzeige, QMC-Konfigurationsinformationen, QoE-Bericht, RANsichtbare QoE-Informationen.

5. Verfahren nach Anspruch 1, wobei das Verfahren für den Fall, dass der erste Netzwerkknoten überlastet ist, einschließt:
Empfangen, durch den ersten Netzwerkknoten von dem zweiten Netzwerkknoten, eines Überlastungsberichts über eine erste XnAP-Nachricht;
wobei die erste XnAP-Nachricht ferner eine Überlastungsanzeige oder eine Pausenanforderung umfasst;
Anzeigen gegenüber der drahtlosen Kommunikationsvorrichtung, dass die QoE-Berichterstattung durch den ersten Netzwerkknoten und den zweiten Netzwerkknoten als Reaktion darauf, dass der erste Netzwerkknoten und der zweite Netzwerkknoten überlastet sind, pausiert ist;
Empfangen, durch den ersten Netzwerkknoten von dem zweiten Netzwerkknoten, eines Wiederaufnahmeberichts über eine zweite XnAP-Nachricht;
wobei die zweite XnAP-Nachricht ferner eine Wiederaufnahmeanzeige umfasst; und
Anzeigen gegenüber der drahtlosen Kommunikationsvorrichtung, dass die QoE-Berichterstattung durch den ersten Netzwerkknoten wieder aufgenommen wurde.

6. Verfahren nach Anspruch 1, ferner umfassend:
Übertragen, durch den ersten Netzwerkknoten an einen dritten Netzwerkknoten, einer zusätzlichen Informationsanfrage;
Übertragen, durch den ersten Netzwerkknoten an den dritten Netzwerkknoten, einer Rekonfigurationsnachricht;
wobei die Informationsanfrage die QMC-Konfigurationsinformationen umfasst;
wobei die QMC-Konfigurationsinformationen ferner eine Pausenstatusanzeige umfassen; und
Übertragen, durch den ersten Netzwerkknoten an den dritten Netzwerkknoten, der Pausenstatusanzeige auf eine oder mehrere der folgenden Arten: XnAP-Nachricht und transparenter Container,
wobei der dritte Netzwerkknoten einen sekundären Zielknoten einschließt.

7. Verfahren nach Anspruch 5, wobei die zusätzliche Informationsanfrage ferner eine duale Konnektivitätsanfrage umfasst;
Übertragen, durch den ersten Netzwerkknoten an einen zweiten Netzwerkknoten, der QMC-Konfigurationsinformationen über eine Konfigurationsanfragenachricht.

8. Verfahren nach Anspruch 1, ferner umfassend:
Übertragen, durch den ersten Netzwerkknoten an einen vierten Netzwerkknoten, der OMC-Konfiguration;
wobei die OMC-Konfiguration über eine Übergabeanfrage übertragen wird;
wobei die QMC-Konfigurationsinformationen ferner eine Pausenstatusanzeige umfassen; und
Übertragen, durch den ersten Netzwerkknoten an den vierten Netzwerkknoten, der Pausenstatusanzeige auf eine oder mehrere der folgenden Arten: XnAP-Nachricht und transparenter Container,
wobei der vierte Netzwerkknoten einen Masterzielknoten einschließt.

9. Verfahren nach Anspruch 8, ferner umfassend:
Kommunizieren, durch den ersten Netzwerkknoten über den vierten Netzwerkknoten, einer zusätzlichen Informationsanfrage an einen dritten Netzwerkknoten, wobei der dritte Netzwerkknoten einen sekundären Zielknoten einschließt.

10. Verfahren nach Anspruch 1, wobei die OMC-Konfiguration ferner Ausrichtungsinformationen umfasst;
wobei die Ausrichtungsinformationen eines oder mehrere der Folgenden umfassen: QoE-Messstartanzeige, MCE-IP-Adresse, Trace-ID-Liste und MDT.

11. Vorrichtung (205) für drahtlose Kommunikation, umfassend einen Prozessor (210), der konfiguriert ist, um das Verfahren nach einem der Ansprüche 1 bis 10 zu implementieren.

12. Computerlesbares Medium, das darauf gespeicherten Code aufweist, wobei der Code, wenn er durch einen Prozessor (210) ausgeführt wird, den Prozessor (210) veranlasst, ein Verfahren, das in einem der Ansprüche 1 bis 10 angegeben ist, zu implementieren.

## Revendications

1. Procédé permettant une communication sans fil, comprenant :
la réception, par un premier nœud de réseau fonctionnant dans un scénario de double connectivité, d'une configuration de collecte de mesures, QMC, de qualité d'expérience, QoE, en provenance d'une fonction d'opérations, d'administration et de maintenance, OAM ;
la transmission, par le premier nœud de réseau, à un dispositif de communication sans fil, de la configuration QMC ;
dans lequel la configuration QMC contient une pluralité de configurations QoE qui comportent des informations d'alignement ;
dans lequel les informations d'alignement contiennent une liste d'ID de trace où chaque ID de trace correspond à une MDT au niveau du premier nœud de réseau ;
dans lequel la configuration QMC est transmise à l'aide d'un message de commande des ressources radio, RRC ;
dans lequel le message RRC comprend une indication de rapport sur la QoE qui indique le premier nœud de réseau ou un deuxième nœud de réseau où le dispositif de communication sans fil doit envoyer un rapport sur la QoE,
dans lequel le premier nœud de réseau comporte un nœud principal, et
dans lequel le deuxième nœud de réseau comporte un nœud secondaire.

2. Procédé selon la revendication 1, comprenant en outre :
la réception, par le premier nœud de réseau, du rapport sur la QoE en provenance du dispositif de communication sans fil.

3. Procédé selon la revendication 1, dans lequel le procédé comporte, dans le cas où le premier nœud de réseau est surchargé :
la transmission, par le premier nœud de réseau, au dispositif de communication sans fil, de l'indication de surcharge par le biais d'un message RRC ;
la transmission, par le premier nœud de réseau, au deuxième nœud de réseau, d'une indication de pause par le biais d'un message d'application de protocole Xn, XnAP, indiquant que le rapport sur la QoE est en mis en pause ; et
la transmission, par le premier nœud de réseau, au deuxième nœud de réseau, d'une indication de reprise par le biais d'un message XnAP indiquant que le rapport sur la QoE peut reprendre.

4. Procédé selon la revendication 3, comprenant en outre :
la réception, par le premier réseau, d'un message de libération en provenance du deuxième nœud de réseau ;
dans lequel le message de libération peut être un message de demande de libération ou un message d'accusé de réception de libération ; et
dans lequel le message de libération comprenant un ou plusieurs parmi ce qui suit : indication d'état de pause, informations de configuration QMC, rapport sur la QoE, informations de QoE visible par le RAN.

5. Procédé selon la revendication 1, dans lequel le procédé comporte, dans le cas où le premier nœud de réseau est surchargé :
la réception, par le premier nœud de réseau en provenance du deuxième nœud de réseau, d'un rapport de surcharge par le biais d'un premier message XnAP ;
dans lequel le premier message XnAP comprenant en outre une indication de surcharge ou une exigence de pause ;
l'indication, au dispositif de communication sans fil, selon laquelle un rapport sur la QoE est mis en pause par le premier nœud de réseau et le deuxième nœud de réseau en réponse à la surcharge du premier nœud de réseau et du deuxième nœud de réseau ;
la réception, par le premier nœud de réseau en provenance du deuxième nœud de réseau, d'un rapport de reprise par le biais d'un second message XnAP ;
dans lequel le second message XnAP comprenant en outre une indication de reprise ; et
l'indication, au dispositif de communication sans fil, selon laquelle un rapport sur la QoE a été repris par le premier nœud de réseau.

6. Procédé selon la revendication 1, comprenant en outre :
la transmission, par le premier nœud de réseau, à un troisième nœud de réseau, d'une demande d'informations supplémentaires ;
la transmission, par le premier nœud de réseau, au troisième nœud de réseau, d'un message de reconfiguration ;
dans lequel la demande d'informations comprenant les informations de configuration QMC ;
dans lequel les informations de configuration QMC comprenant en outre une indication d'état de pause ; et
la transmission, par le premier nœud de réseau, au troisième nœud de réseau, de l'indication d'état de pause par le biais d'un ou plusieurs des moyens suivants : message XnAP et conteneur transparent,
dans lequel le troisième nœud de réseau comporte un nœud secondaire cible.

7. Procédé selon la revendication 5, dans lequel la demande d'informations supplémentaires comprenant en outre une demande de double connectivité ;
la transmission, par le premier nœud de réseau, à un deuxième nœud de réseau, des informations de configuration QMC par le biais d'un message de demande de configuration.

8. Procédé selon la revendication 1, comprenant en outre :
la transmission, par le premier nœud de réseau, à un quatrième nœud de réseau, de la configuration QMC ;
dans lequel la configuration QMC est transmise par le biais d'une demande de transfert ;
dans lequel les informations de configuration QMC comprenant en outre une indication d'état de pause ; et
la transmission, par le premier nœud de réseau, au quatrième nœud de réseau, de l'indication d'état de pause par un ou plusieurs des moyens suivants : message XnAP et conteneur transparent,
dans lequel le quatrième nœud de réseau comporte un nœud principal cible.

9. Procédé selon la revendication 8, comprenant en outre :
la communication, par le premier nœud de réseau par le biais du quatrième nœud de réseau, d'une demande d'informations supplémentaires à un troisième nœud de réseau, dans lequel le troisième nœud de réseau comporte un nœud secondaire cible.

10. Procédé selon la revendication 1, dans lequel la configuration QMC comprenant en outre des informations d'alignement ;
dans lequel les informations d'alignement comprenant un ou plusieurs parmi ce qui suit : indication de début de mesure sur la QoE, adresse IP de MCE, liste d'ID de trace et MDT.

11. Appareil (205) pour une communication sans fil comprenant un processeur (210), configuré pour mettre en œuvre le procédé selon l'une quelconque des revendications 1 à 10.

12. Support lisible par ordinateur sur lequel est stocké un code, le code, lorsqu'il est exécuté par un processeur (210), amenant le processeur (210) à mettre en œuvre un procédé selon l'une quelconque des revendications 1 à 10.
